# EUROPÄISCHE PATENTSCHRIFT

(11) **EP 2 915 622 B1**
(45) Veröffentlichungstag und Bekanntmachung des Hinweises auf die Patenterteilung: **04.05.2016**
(21) Anmeldenummer: 15157309.4
(22) Anmeldetag: 03.03.2015
(51) Int. Cl.: B23Q 1/01, B23Q 3/157, B24B 3/34

(54) **BEARBEITUNGSMASCHINE, INSBESONDERE SCHLEIFMASCHINE, MIT EINEM DREHBAREN WERKZEUGMAGAZIN**
PROCESSING MACHINE, IN PARTICULAR GRINDING MACHINE, WITH A ROTATING TOOL MAGAZINE
MACHINE D'USINAGE, EN PARTICULIER RECTIFIEUSE, AVEC UN MAGASIN D'OUTILS ROTATIF

(30) Priorität: 05.03.2014 DE 102014102938
(43) Veröffentlichungstag der Anmeldung: 09.09.2015
(73) Patentinhaber: HAAS Schleifmaschinen GmbH, 78647 Trossingen (DE)
(72) Erfinder: Braun, Hans-Dieter, 78665 Frittlingen (DE)
(74) Vertreter: Westphal, Mussgnug & Partner Patentanwälte mbB

(56) Entgegenhaltungen:
- EP-A1- 0 186 726
- EP-B1- 1 886 762
- SU-A1- 1 151 413

## Beschreibung

Die Erfindung betrifft eine Bearbeitungsmaschine, insbesondere eine Schleifmaschine gemäß dem Oberbegriff des Patentanspruchs 1.

Eine solche Bearbeitungsmaschine, insbesondere eine Schleifmaschine in Gantry-Bauweise weist zwei seitlich am Maschinenbett angeordnete vertikale Ständer auf, auf welchen eine Brücke in einer ersten horizontalen linearen Achse numerisch gesteuert verfahrbar ist. An dieser Brücke ist in einer zu dieser ersten Achse orthogonalen horizontalen zweiten Achse ein Schlitten numerisch gesteuert verfahrbar. An dem Schlitten ist in einer zu den beiden horizontalen Achsen orthogonalen vertikalen dritten linearen Achse ein weiterer Schlitten gelagert. Zur einfacheren Bezugnahme wird in der Beschreibung und in den Patentansprüchen die erste horizontale lineare Achse als Y-Achse, die zweite horizontale lineare Achse als X-Achse und die vertikale lineare Achse als Z-Achse bezeichnet. Der in der zweiten horizontalen linearen Achse verfahrbare Schlitten wird als X-Schlitten und der in der vertikalen linearen Achse verfahrbare Schlitten als Z-Schlitten bezeichnet. An dem Z-Schlitten ist eine Arbeitsspindel gelagert. Auf dem Maschinenbett ist ein Maschinentisch angeordnet, der eine Werkstückspanneinrichtung zum Spannen des zu bearbeitenden Werkstücks trägt.

In der Beschreibung und in den Zeichnungen wird die Bearbeitungsmaschine als Schleifmaschine dargestellt und bezeichnet und entsprechend die Arbeitsspindel als Schleifspindel. Die Erfindung ist jedoch auch für andere Bearbeitungsmaschinen geeignet, zum Beispiel für Fräsmaschinen, Bearbeitungszentren und dergleichen.

Aus der EP 1 886 762 B1 ist es bekannt, eine Schleifmaschine mit einem Werkzeugmagazin auszustatten, das als Rad ausgebildet ist und an seinem Umfang Werkzeugaufnahmen zum auswechselbaren Aufnehmen von Werkzeugen aufweist. Dieses Werkzeugmagazin ist um eine zur Z-Achse parallele vertikale Achse drehbar neben dem Arbeitsraum der Schleifmaschine angeordnet. Durch numerisch gesteuertes Drehen des Werkzeugmagazins kann jeweils eine ausgewählte Werkzeugaufnahme in eine Wechselposition gedreht werden, in welcher sich diese Werkzeugaufnahme im Arbeitsraum der Schleifmaschine befindet, sodass die Schleifspindel an die sich in der Wechselposition befindende Werkzeugaufnahme gefahren werden kann, um ein Werkzeug aus dieser Werkzeugaufnahme zu entnehmen oder ein Werkzeug in diese Werkzeugaufnahme abzulegen.

Die Anordnung des als Rad ausgebildeten Werkzeugmagazins neben dem Arbeitsraum der Schleifmaschine vergrößert die erforderliche Stellfläche für die Schleifmaschine. Damit das Werkzeugmagazin die Bearbeitung im Arbeitsraum nicht behindert, weist das Rad des Werkzeugmagazins einen freien Sektor auf, der mit der Fläche des Arbeitsraumes zur Deckung gebracht wird, wenn eine Bearbeitung eines Werkstückes stattfindet. Dieser freie Sektor begrenzt die Anzahl der Werkzeugaufnahmen und damit die Aufnahmekapazität des Werkzeugmagazins.

Aus der EP 0 611 630 B1 ist eine Schleifmaschine in Gantry Bauweise bekannt, bei welcher an einer horizontalen Brücke ein erster Schlitten horizontal in einer linearen Achse verfahrbar ist. An diesem Schlitten ist in einer vertikalen Z-Achse ein Z-Schlitten verfahrbar, der eine Schleifspindel trägt. Auf dem Maschinenbett ist ein Maschinentisch gelagert, der eine Werkzeugspanneinrichtung trägt. Der Maschinentisch ist in einer zweiten horizontalen linearen Achse verfahrbar und um eine zur Z-Achse parallele C-Achse rotierbar. Außerdem ist die Werkstückspanneinrichtung um eine horizontale Achse drehbar. Ein Werkzeugmagazin ist nicht vorgesehen.

Der Erfindung liegt die Aufgabe zu Grunde, eine Bearbeitungsmaschine, insbesondere eine Schleifmaschine, mit einem Werkzeugmagazin so zu gestalten, dass eine möglichst geringe Stellfläche beansprucht wird.

Diese Aufgabe wird erfindungsgemäß gelöst durch eine Bearbeitungsmaschine, insbesondere eine Schleifmaschine, mit den Merkmalen des Patentanspruchs 1.

Vorteilhafte Ausführungen und Weiterbildungen der Erfindung sind in den Unteransprüchen angegeben.

Der wesentliche Gedanke der Erfindung besteht darin, das als Magazinrad ausgebildete Werkzeugmagazin unter dem Maschinentisch anzuordnen. Dadurch nimmt das Werkzeugmagazin keinen zusätzlichen Stellplatz in Anspruch. Der Platzbedarf der Schleifmaschine ist nicht größer als der einer Schleifmaschine ohne Werkzeugmagazin. Das Werkzeugmagazin ist für den Werkzeugwechsel zugänglich, da es mit seiner Wechselposition seitlich über den Maschinentisch hinausragt. Die Schleifspindel kann dadurch in der Z-Achse an dem Maschinentisch vorbei nach unten an die sich jeweils in der Wechselposition befindende Werkzeugaufnahme fahren, um ein Werkzeug abzulegen oder ein Werkzeug aufzunehmen.

In einer vorteilhaften Ausführung ist der die Werkstückspanneinrichtung tragende Maschinentisch um die vertikale C-Achse drehbar. Dadurch ist es möglich, das an dem Maschinentisch gespannte Werkstück gegenüber dem in der Schleifspindel gespannten Werkzeug, vorzugsweise einer Schleifscheibe, zu verschwenken, um eine vierachsige Schleifbearbeitung durchzuführen. Die Schleifspindel muss in dieser Ausführung nicht um die C-Achse verschwenkt werden und kann somit unverschwenkbar an dem Z-Schlitten angeordnet sein. Die Achse der Schleifspindel ist dabei vorzugsweise in der Y-Achse ausgerichtet, sodass sie zwischen den vertikalen Ständern und parallel zu diesen liegt. Der Antrieb der Schleifspindel und deren Werkzeugspanneinheit bestimmen zwar die axiale Abmessung der Schleifspindel, da diese jedoch nicht um die C-Achse verschwenkt wird, kann der lichte Innenabstand der seitlichen Ständer unabhängig von der axialen Abmessung der Schleifspindel gewählt werden. Dies ermöglicht eine Reduzierung der Breite der Schleifmaschine und damit der erforderlichen Stellfläche.

Eine besonders kompakte Ausführung wird dadurch möglich, dass das Werkzeugmagazin koaxial mit der C-Achse des Maschinentischs drehbar ist. Diese koaxiale Ausführung ermöglicht außerdem einen besonders vorteilhaften einfachen Drehantrieb des Werkzeugmagazins. Das Werkzeugmagazin kann gesteuert an den Antrieb der C-Achse des Maschinentisches angekuppelt werden, sodass kein zusätzlicher Antrieb für das Werkzeugmagazin notwendig ist.

In einer vorteilhaften Ausführung ist die auf dem Maschinentisch angeordnete Werkstückspanneinrichtung numerisch gesteuert drehbar, sodass das gespannte Werkstück um seine Achse rotiert werden kann. Dadurch ergibt sich eine zusätzliche Rotationsachse als A-Achse, sodass eine fünfachsige Schleifbearbeitung möglich ist.

In vorteilhafter Weise ist der Maschinentisch mit zwei parallelen Seitenkanten, das heißt im Wesentlichen rechteckig ausgebildet. Das Magazinrad des Werkzeugmagazins ragt mit seinem Umfang an den beiden Seitenkanten seitlich über den Maschinentisch hinaus. Wird der Maschinentisch mit seinen parallelen Seitenkanten in der X-Achse ausgerichtet, so kann der Z-Schlitten mit der Schleifspindel an der von der Bedienerseite abgewandten rückseitigen Seitenkante vorbei auf das Werkzeugmagazin zugreifen. Frontseitig ist das Werkzeugmagazin gleichzeitig für die Bedienungsperson zugänglich, sodass ein Bestücken und Umrüsten des Werkzeugmagazins von der Frontseite möglich ist. Ebenso kann der Maschinentisch so um die C-Achse geschwenkt werden, dass der Antrieb und die Spannmittel der Werkstückspanneinrichtung der Frontseite und damit der Bedienungsperson zugewandt sind. Auch die Werkstückspanneinrichtung kann daher von der Frontseite her bedient werden. Da sämtliche Bedienungsmaßnahmen von der Frontseite her durchgeführt werden können, ist es möglich, mehrere Schleifmaschinen lückenlos seitlich aneinander gereiht aufzustellen. Hierdurch ergibt sich eine besonders effektive Verringerung der benötigten Stellfläche.

Im Folgenden wird die Erfindung anhand eines in der Zeichnung dargestellten Ausführungsbeispiels näher erläutert. Es zeigen:

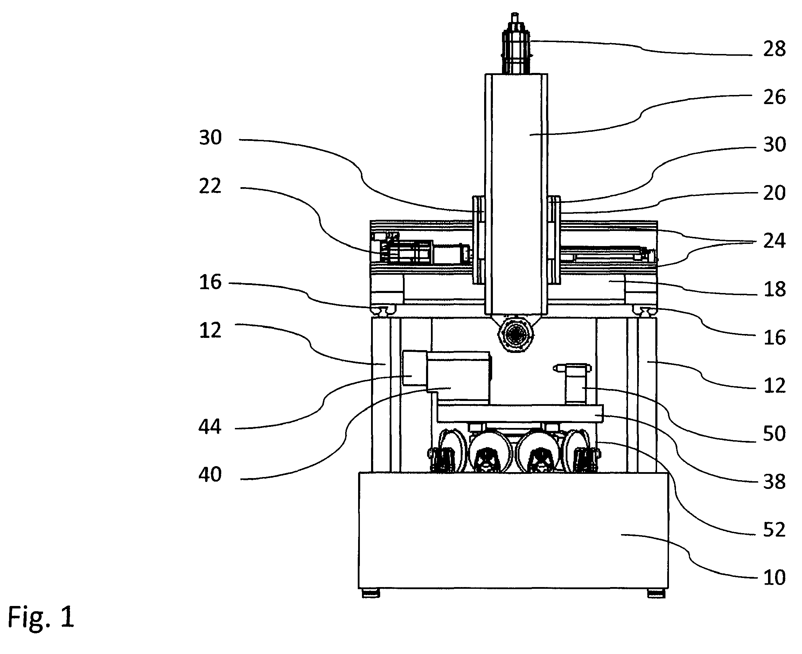

- Figur 1: eine Frontansicht einer Schleifmaschine gemäß der Erfindung,

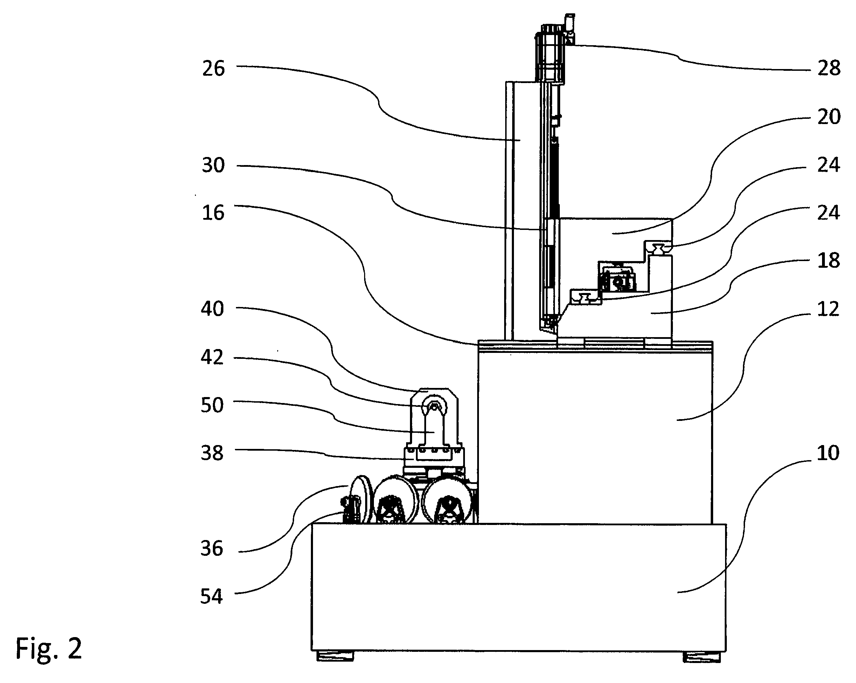

- Figur 2: eine Seitenansicht der Schleifmaschine,
- Figur 3: eine Draufsicht auf die Schleifmaschine,
- Figur 4: eine perspektivische Ansicht der Schleifmaschine mit gespanntem Werkstück, wobei das Werkstück in der X-Achse ausgerichtet ist,
- Figur 5: eine entsprechende Ansicht, wobei die Werkstückachse um die C-Achse in eine Endstellung des Schwenkweges geschwenkt ist,
- Figur 6: eine entsprechende Darstellung, wobei die Achse des Werkstückes in der Y-Achse ausgerichtet ist,
- Figur 7: eine entsprechende Darstellung, wobei die Achse des Werkstückes um die C-Achse in die andere Endstellung der Schwenkbewegung verschwenkt ist,
- Figur 8: eine perspektivische Ansicht der Schleifmaschine, wobei die Schleifspindel in die Werkzeugwechselposition an das Werkzeugmagazin gefahren ist,
- Figur 9: im Vertikalschnitt den Antrieb der C-Achse und des Werkzeugmagazins, wobei das Werkzeugmagazin drehfest am Maschinenbett gekoppelt ist,
- Figur 10: einen Figur 9 entsprechenden Axialschnitt, wobei das Werkzeugmagazin indexiert am Maschinentisch positioniert ist und die Indexstößel angefahren sind,
- Figur 11: ein Figur 9 entsprechenden Axialschnitt, wobei das Werkzeugmagazin vom Maschinenbett abgehoben und drehfest mit dem Maschinentisch gekoppelt ist,
- Figur 12: die Ausgangsposition für einen Werkzeugwechsel,
- Figur 13: eine Figur 12 entsprechende Darstellung, wobei der Maschinentisch in Bezug auf eine Werkzeugaufnahme mit einem auszuwechselnden Werkzeug ausgerichtet ist,
- Figur 14: eine Figur 12 entsprechende Darstellung, bei welcher der Maschinentisch mit dem Werkzeugmagazin so gedreht ist, dass sich die Werkzeugaufnahme mit dem auszuwählenden Werkzeug in der Wechselposition befindet und
- Figur 15: eine entsprechende Darstellung, bei welcher die Schleifspindel abgesenkt ist, um das Werkzeug in der Wechselposition aufzunehmen.

In dem Ausführungsbeispiel ist eine als Schleifmaschine ausgebildete Bearbeitungsmaschine gezeigt. Eine andere Bearbeitung, insbesondere ein Fräsen, ist mit einer entsprechend ausgebildeten Bearbeitungsmaschine ebenfalls möglich.

Die Schleifmaschine weist ein Maschinenbett 10 auf, auf dem beidseitig jeweils ein vertikaler Ständer 12 angeordnet ist. Die Ständer 12 können an der Rückseite durch eine Rückwand 14 miteinander verbunden sein. Auf den Oberkanten der Ständer 12 ist jeweils eine lineare Führung 16 angeordnet, die horizontal und senkrecht zur Frontseite der Schleifmaschine in der Y-Achse verläuft. Eine Brücke 18 sitzt mit ihren beiden Enden jeweils auf den Ständern 12 auf und ist auf den Y-Führungen 16 numerisch gesteuert in der Y-Achse verfahrbar. In der zur Frontseite der Schleifmaschine parallelen X-Achse ist auf der Brücke 18 ein X-Schlitten 20 mittels eines Antriebs 22 auf X-Führungen 24 numerisch gesteuert verfahrbar. An dem X-Schlitten 20 ist ein Z-Schlitten 26 gelagert, der in der zu der Y-Achse und der X-Achse senkrechten vertikalen Z-Achse mittels eines Z-Antriebs 28 in Z-Führungen 30 des X-Schlittens 20 numerisch gesteuert verfahrbar ist. Unten am dem Z-Schlitten 26 ist eine als Schleifspindel 32 bezeichnete Arbeitsspindel angeordnet. Die Schleifspindel 32 ist mit ihrer Achse horizontal in der Y-Richtung ausgerichtet an dem Z-Schlitten 26 angeordnet. Die Schleifspindel 32 weist einen Rotationsantrieb auf und an ihrem frontseitigen Ende ein Spannfutter 34 für ein Werkzeug, insbesondere eine Schleifscheibe 36.

Auf dem Maschinenbett 10 ist ein horizontaler Maschinentisch 38 angeordnet. Der Maschinentisch 38 hat im Wesentlichen die Form einer rechteckigen Platte und ist in später näher beschriebener Weise um eine mittig in Bezug auf die Ständer 12 angeordnete vertikale C-Achse drehbar. Auf dem Maschinentisch 38 ist eine Werkstückspanneinrichtung 40 angeordnet. Die Werkstückspanneinrichtung 40 weist eine horizontale A-Achse 42 auf, die mittels eines A-Antriebs 44 numerisch gesteuert drehbar ist. Die A-Achse 42 weist Spannmittel 46 für ein zu bearbeitendes Werkstück 48 auf. Zusätzlich kann der Maschinentisch 38 ein Gegenlager 50 zum Abstützen des freien Endes des Werkstückes 48 aufweisen.

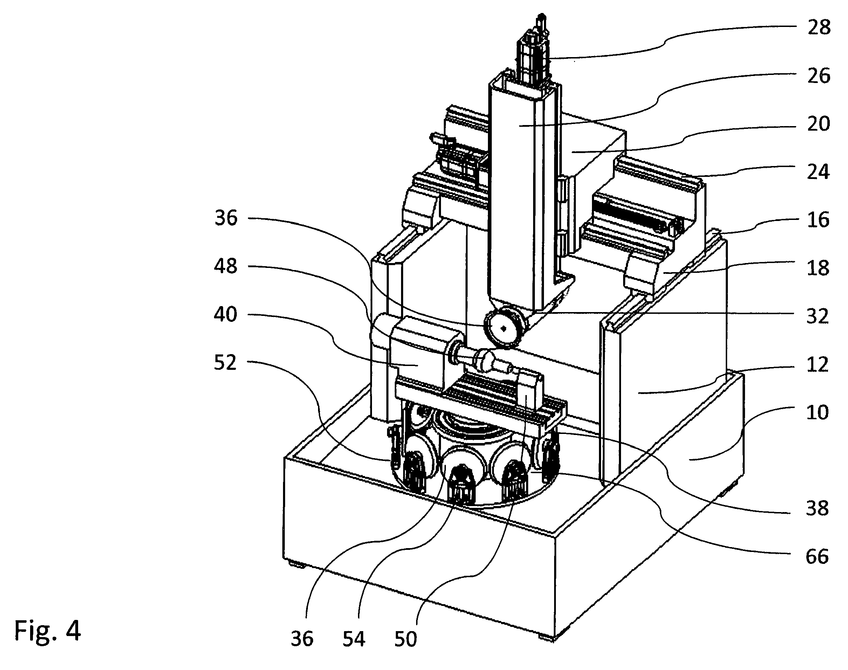

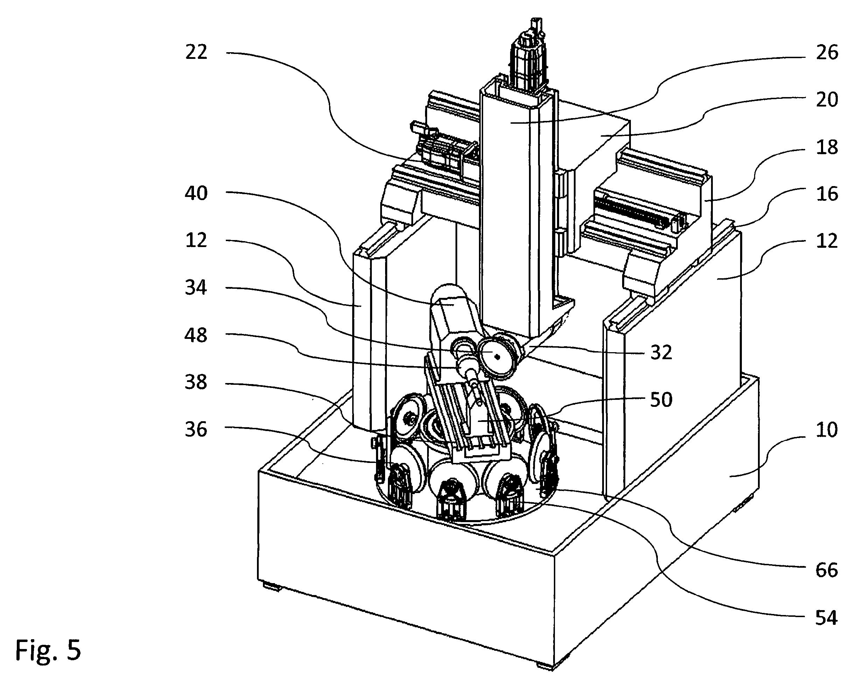

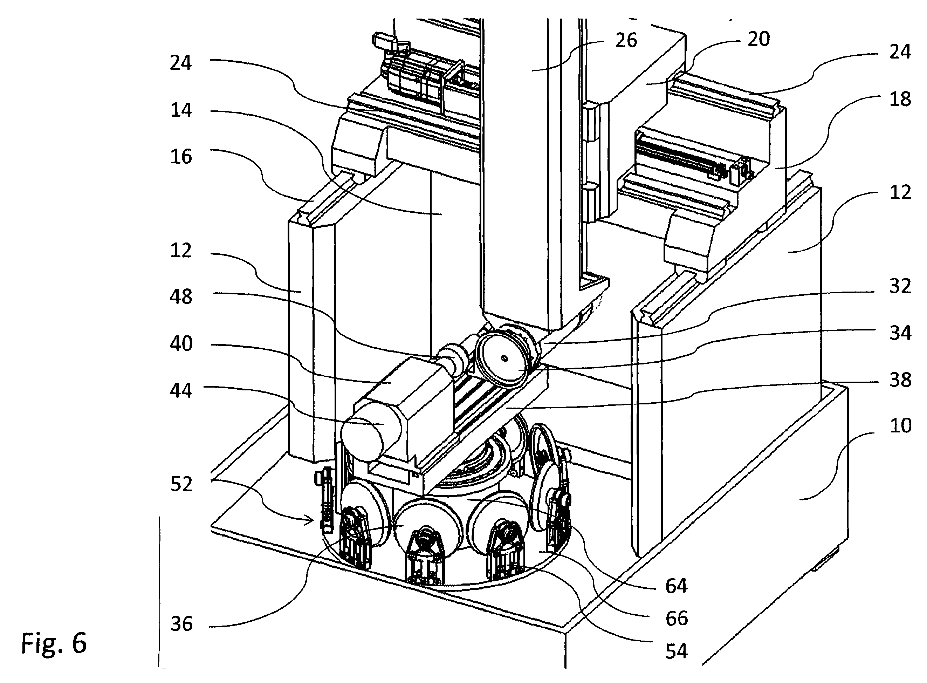

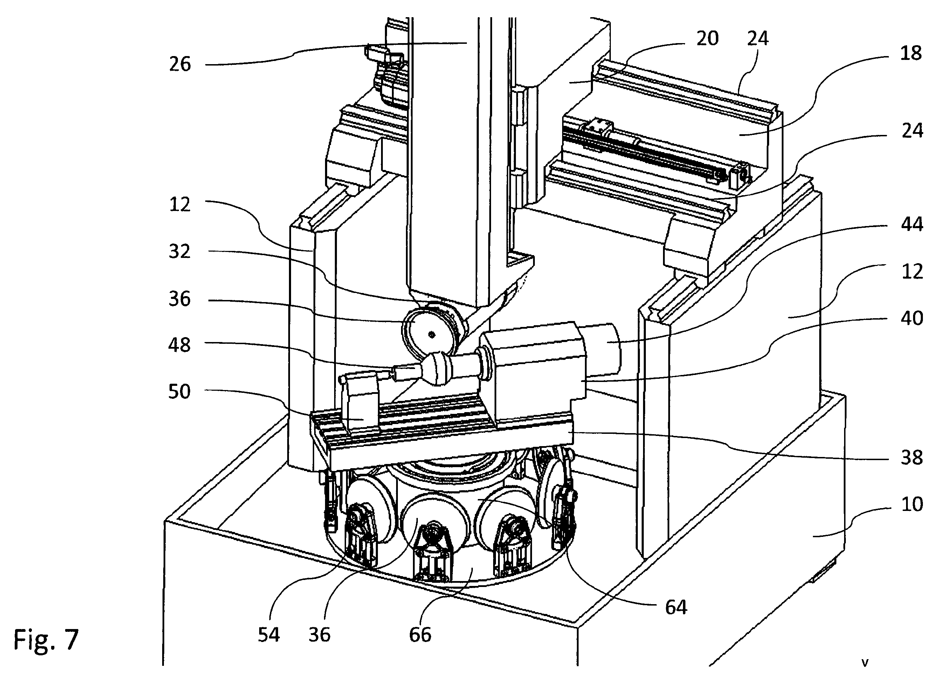

Wie die Figuren 4 bis 7 zeigen, ist mittels der dargestellten Schleifmaschine ein fünfachsiges Schleifen eines Werkstückes 48 möglich. Ist die A-Achse 42 mit dem Werkstück 48 in der X-Achse ausgerichtet, wie in Figur 4 dargestellt ist, so können Umfangsflächen des Werkstückes 48 durch Verfahren der Schleifscheibe 36 in den drei linearen Achsen und durch Rotation des Werkstückes 48 um die A-Achse 42 geschliffen werden. Durch Verschwenken des Maschinentisches 38 um die C-Achse können gegen die Werkstück-Achse geneigte Flächen des Werkstückes 48 geschliffen werden. Dabei ist ein Verschwenken des Maschinentischs 38 von der in Figur 5 gezeigten einen Endstellung bis in die in Figur 7 gezeigte andere Endstellung möglich, um gewünschte konische Flächen des Werkstückes 48 zu erzeugen. Wird der Maschinentisch 38 um die C-Achse in die in Figur 6 gezeigte Stellung geschwenkt, in welcher die A-Achse 42 in der Y-Richtung ausgerichtet ist, so sind zur Achse des Werkstückes 48 senkrechte Werkstückflächen schleifbar. Durch die Verschwenkbarkeit des Maschinentisches 38 in die Endstellungen der Figuren 5 und 7 ist es möglich, Schrägflächen des Werkstückes 48 in beiden axialen Richtungen zu schleifen, wobei hierzu die Schleifscheibe 36 in der Y-Achse nur bis zur Mittelachse des Werkstückes 48 verfahren werden muss. Der kurze Verfahrweg begünstigt die Steifheit und Stabilität.

In einer in der Zeichnung nicht dargestellten vorteilhaften Ausführung ist auf dem Maschinentisch 38 neben der Werkstückspanneinrichtung 40 zusätzlich eine Abrichteinheit angeordnet. Die Drehachse der Abrichteinheit ist horizontal und parallel zur A-Achse 42 angeordnet. Eine abzurichtende Schleifscheibe 36 wird an der Schleifspindel 32 gespannt und kann in den drei linearen Achsen X, Y und Z an die Abrichteinheit gefahren werden. Durch Drehen der Schleifscheibe 36 um die Schleifspindel 32 und durch Verschwenken des Maschinentisches 38 mit der Abrichteinheit um die vertikale C-Achse, wie dies in den Figuren 4 bis 7 dargestellt ist, kann die Schleifscheibe 36 an ihrem gesamten Umfang und in ihrer Umfangskontur (Crossdressing) vollständig abgerichtet werden.

Unter dem Maschinentisch 38 ist ein Werkzeugmagazin 52 angeordnet. Das Werkzeugmagazin 52 hat die Form eines Rades, welches koaxial zu der vertikalen C-Achse des Maschinentisches 38 angeordnet und um die C-Achse drehbar ist. Das Werkzeugmagazin 52 trägt an seinem Umfang Werkzeugaufnahmen 54, in welche von oben Werkzeuge, zum Beispiel Schleifscheiben 36, eingesetzt beziehungsweise nach oben entnommen werden können. Der Schaft der Werkzeuge ist dabei radial nach außen gerichtet.

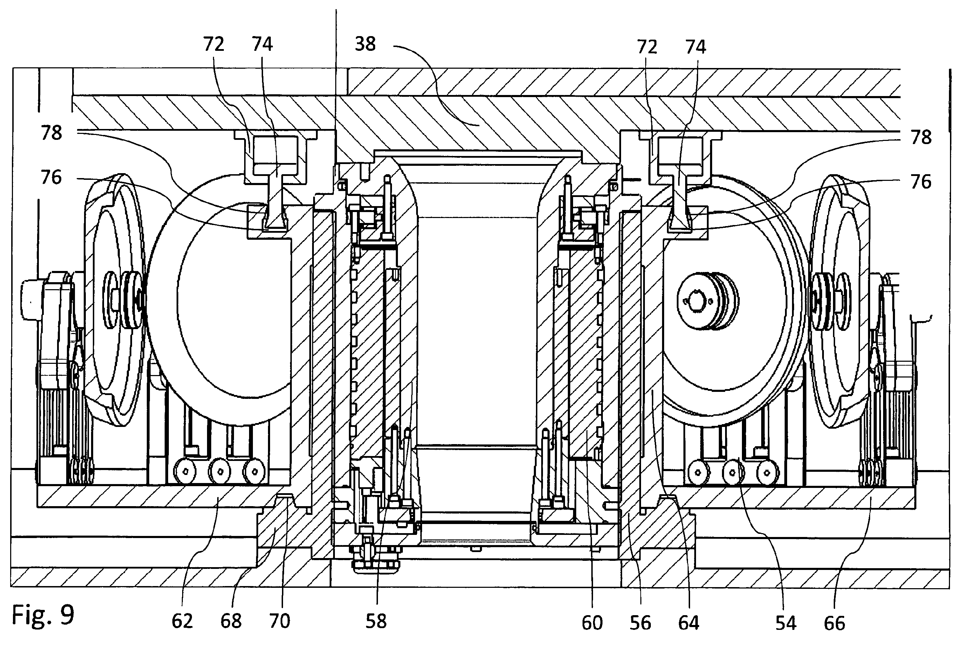

Der Aufbau und die Funktionsweise der C-Achse des Maschinentisches 38 und des Werkzeugmagazines 52 werden in einer beispielhaften Ausführung anhand der Figuren 9 bis 11 nachfolgend erläutert.

Auf dem Maschinenbett 10 ist ein C-Gehäuse 56 fest montiert. Das C-Gehäuse 56 hat die Form eines von dem Maschinenbett 10 senkrecht nach oben ragenden Hohlzylinders, der nach oben offen ist. Von oben in das C-Gehäuse 56 ist koaxial ein zylindrischer C-Achsenkörper 58 eingesetzt. Der C-Achsenkörper 58 ist in dem C-Gehäuse 56 drehbar gelagert und kann mittels eines in dem C-Gehäuse 56 feststehend eingesetzten und den C-Achsenkörper 58 koaxial umschließenden C-Antriebsmotors 60 numerisch gesteuert gedreht werden. Oben auf dem C-Achsenkörper 58 ist drehfest der Maschinentisch 38 montiert. Mittels des C-Antriebsmotors 60 kann somit der Maschinentisch 38 gesteuert um die vertikale C-Achse gegenüber dem Maschinenbett 10 gedreht werden.

Auf dem C-Gehäuse 56 sitzt frei drehbar ein Magazinrad 62 des Werkzeugmagazines 52. Das Magazinrad 62 besteht aus einem das C-Gehäuse 56 koaxial umschließenden Rohrkörper 64 und einer am unteren Ende des Rohrkörpers 64 angesetzten radial nach außen weisenden horizontalen Trägerscheibe 66. Das Magazinrad 62 ist mittels des Rohrkörpers 64 auf dem Außenumfang des C-Gehäuses 56 drehbar und vertikal, das heißt axial, verschiebbar geführt. Auf der Oberseite der Trägerscheibe 66 an deren Kreisumfang sind in gegenseitigem Winkelabstand die Werkzeugaufnahmen 54 angeordnet. Im dargestellten Ausführungsbeispiel sind neun Werkzeugaufnahmen 54 vorgesehen. Die Werkzeugaufnahmen 54 sind so ausgebildet, dass ein Werkzeug, insbesondere eine Schleifscheibe 36, mit radial und horizontal ausgerichteter Achse in die Werkzeugaufnahme 54 eingesetzt und in dieser gehalten werden kann. Die vertikale Höhe des C-Gehäuses 56 und des Magazinrades 62 sind so dimensioniert, dass sich die Werkzeugaufnahmen 54 mit den jeweils eingesetzten Schleifscheiben 36 vollständig unterhalb des Maschinentisches 38 befinden. Ein freies gegenseitiges Verdrehen von Maschinentisch 38 und Werkzeugmagazin 52 ist dadurch möglich.

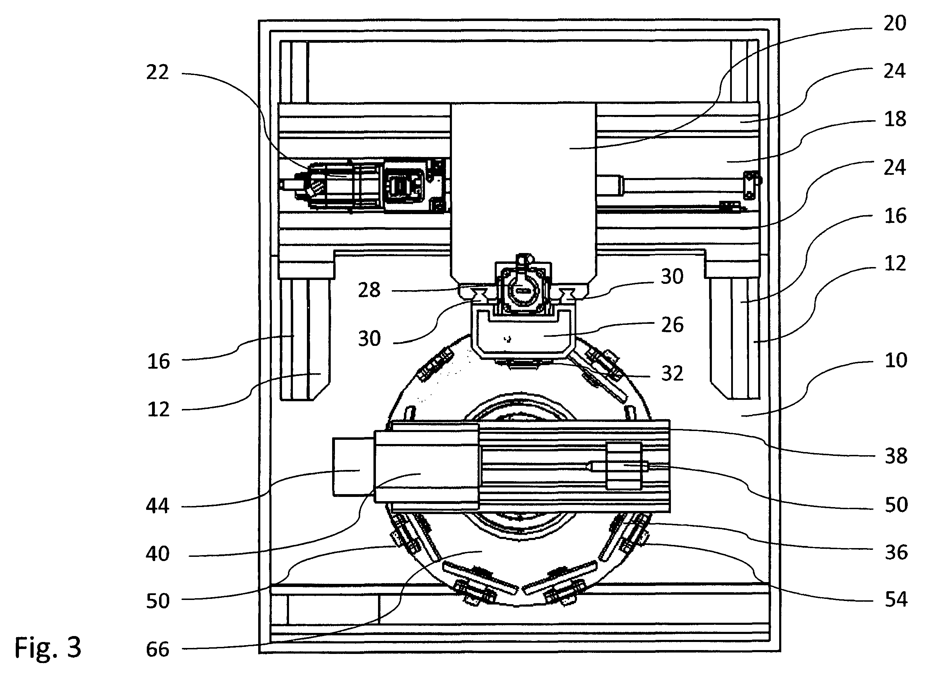

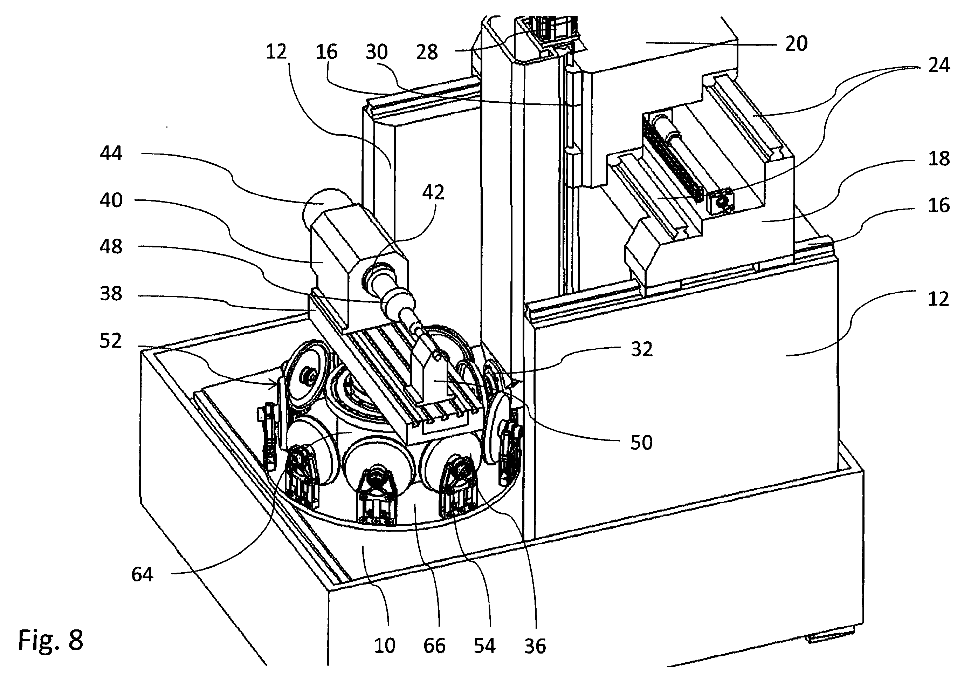

Wie am deutlichsten in Figur 3 zu sehen ist, ist der Außendurchmesser der Trägerscheibe 66 des Werkzeugmagazines 52 so dimensioniert, dass die Trägerscheibe 66 jeweils mit zumindest einer Werkzeugaufnahme 54 vollständig über die beiden parallelen Längsseitenkanten des rechteckigen Maschinentisches 38 hinausragt. Dadurch ist es möglich, eine ausgewählte Werkzeugaufnahme 54 in eine von der Bedienerfrontseite der Schleifmaschine abgewandte Wechselposition zu bringen, in welcher die Schleifspindel 32 mit dem Z-Schlitten 26 hinter dem Maschinentisch 38 vertikal an diesem vorbei nach unten gefahren werden kann, um ein Werkzeug, zum Beispiel eine Schleifscheibe 36, in die Werkzeugaufnahme 54 in dieser Wechselposition abzulegen oder eine Schleifscheibe 36 aus dieser Werkzeugaufnahme 54 zu entnehmen, wie dies in Figur 8 gezeigt ist. An der Benutzerfrontseite ist ebenfalls wenigstens eine Werkzeugaufnahme 54 von oben vor dem Maschinentisch 38 zugänglich, sodass das Werkzeugmagazin 52 von der Frontseite durch eine Bedienperson bestückt werden kann. Die Bestückung des Werkzeugmagazines 52 von der Frontseite ist von Vorteil, da hierdurch ein lückenloses seitliches Aneinanderstellen mehrerer Schleifmaschinen möglich ist.

Das Werkzeugmagazin 52 ist durch eine Abdeckhaube gegen Kühl- und Schmiermittel sowie gegen Späne und Schleifmittelabfall geschützt. Die Abdeckhaube ist in der Zeichnung nicht dargestellt, um den Aufbau des Werkzeugmagazines 52 sichtbar zu machen. Die Abdeckhaube ist vorzugsweise domförmig aufgebaut und kann durch Verschieben einzelner Sektoren in Umfangsrichtung für den Zugang zu den Werkzeugaufnahmen 54 geöffnet werden.

Der Drehantrieb des Werkzeugmagazines 52 erfolgt in vorteilhafter Weise durch den C-Antriebsmotor 60, sodass Kosten und Platzbedarf eingespart werden. Hierzu kann das Werkzeugmagazin 52 bei Bedarf an den Antrieb durch den C-Antriebsmotor 60 in folgender Weise angekoppelt werden. An dem C-Gehäuse 56 ist ein äußerer Kranz von nach oben gerichteten konischen Positionierzapfen 68 ausgebildet. Den in gleichem Winkelabstand über den Umfang des C-Gehäuses 56 verteilten Positionierzapfen 68 entsprechen auf gleichem Radius und in gleichem Winkelabstand an der Unterseite des Rohrkörpers 64 angeordnete konische Positionierbohrungen 70. An der Unterseite des Maschinentisches 38 sind diametral in Bezug auf die C-Achse zwei Indexaggregate 72 angeordnet. Die gesteuert fluidbetätigten Indexaggregate 72 weisen jeweils einen nach unten gerichteten Indexstößel 74 auf, dessen freies unteres Ende konisch verbreitert ist. In einem Außenbund am oberen Ende des Rohrkörpers 64 ist eine nach oben offene T-Nut 76 ausgebildet. Die T-Nut 76 weist in einer vorgegebenen Winkelteilung gegen die Oberseite des Außenbundes gerichtete, sich nach oben verjüngende Indexbohrungen 78 auf. Die Indexbohrungen 78 können beispielsweise in einem gegenseitigen Winkelabstand von 10° angeordnet sein. Die Indexstößel 74 der Indexaggregate 72 ragen in diese T-Nut 76 hinein.

In der in Figur 9 gezeigten Stellung sind die Indexstößel 74 in ihre untere Endstellung ausgefahren. Die konisch verbreiterten Enden der Indexstößel 74 ragen frei in die T-Nut 76, sodass die Indexstößel 74 nicht mit dem Bund des Rohrkörpers 64 in Berührung sind. Das Magazinrad 62 gleitet aufgrund seines Gewichtes vertikal nach unten, sodass es sich mit seinen Positionierbohrungen 70 auf die maschinenfesten Positionierzapfen 68 aufsetzt. Das Magazinrad 62 und damit das Werkzeugmagazin 52 ist damit über die Positionierzapfen 68 und die Positionierbohrungen 70 drehfest mit dem Maschinenbett 10 gekuppelt. Die Indexstößel 74 können sich frei in der T-Nut 76 bewegen, sodass der Maschinentisch 38 unabhängig von dem Werkzeugmagazin 52 gesteuert gedreht werden kann, um die Bearbeitung des Werkstückes 48 durch die Schleifscheibe 36 zu ermöglichen.

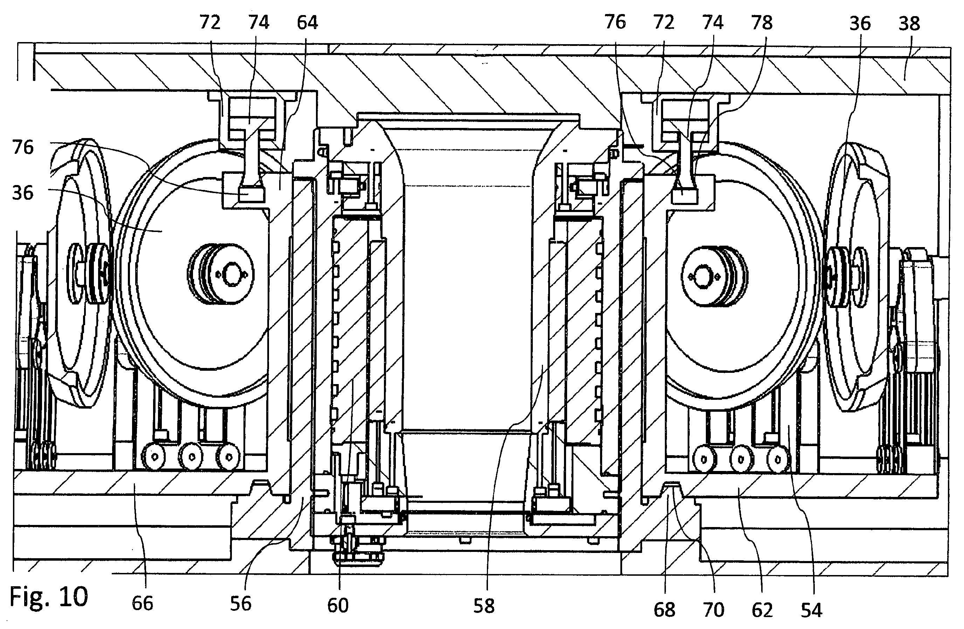

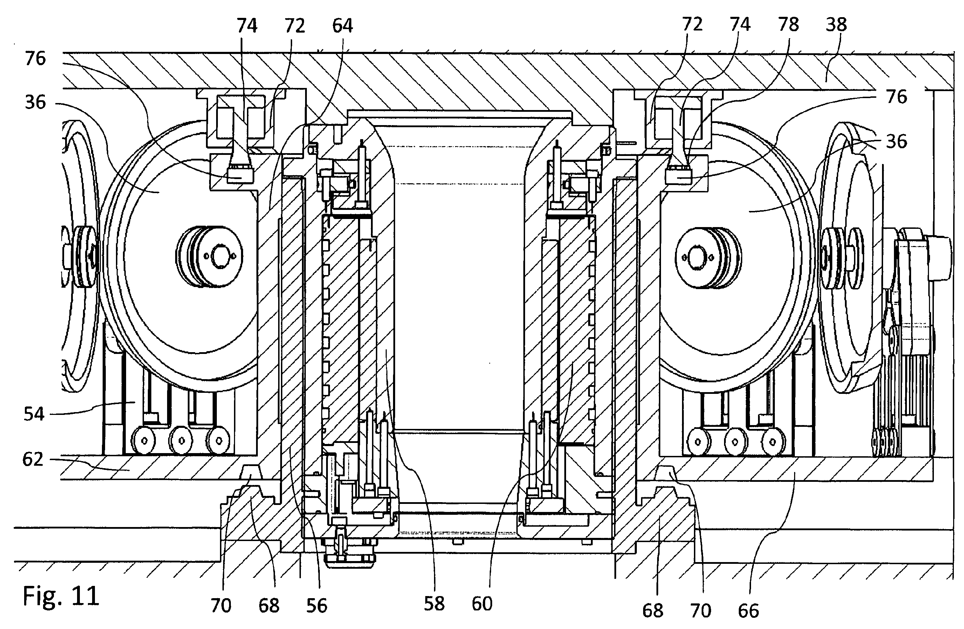

Soll das Werkzeugmagazin 52 gedreht werden, so wird zunächst der Maschinentisch 38 in eine Position gedreht, in welcher sich die Indexstößel 74 in der Winkelposition von Indexbohrungen 78 der T-Nut 76 befinden. Die Indexstößel 74 werden nach oben in das Indexaggregat 72 gezogen, sodass sie sich mit ihren konisch verbreiterten Enden in die konischen Indexbohrungen 78 einfügen, wie dies in Figur 10 gezeigt ist. Dadurch ist das Magazinrad 62 in einer definierten Winkelstellung drehfest mit dem Maschinentisch 38 gekuppelt. Dann werden die Indexstößel 74 der Indexaggregate 72 vollständig in ihre obere Endstellung gefahren, wie dies Figur 11 zeigt. Dadurch wird das Magazinrad 62 vertikal nach oben gegen den Maschinentisch 38 gezogen, wodurch die Positionierbohrungen 70 von dem Positionierzapfen 68 abgehoben werden. Das Magazinrad 62 kommt dadurch von dem C-Gehäuse 56 und dem Maschinenbett 10 frei und kann mittels des C-Antriebsmotors 60 zusammen mit dem Maschinentisch 38 gedreht werden.

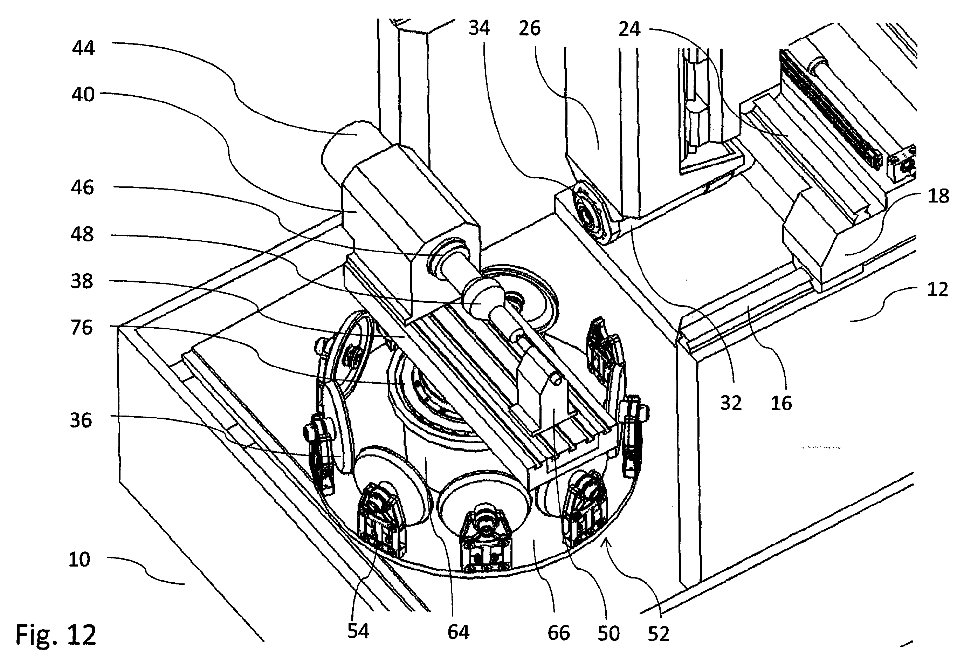

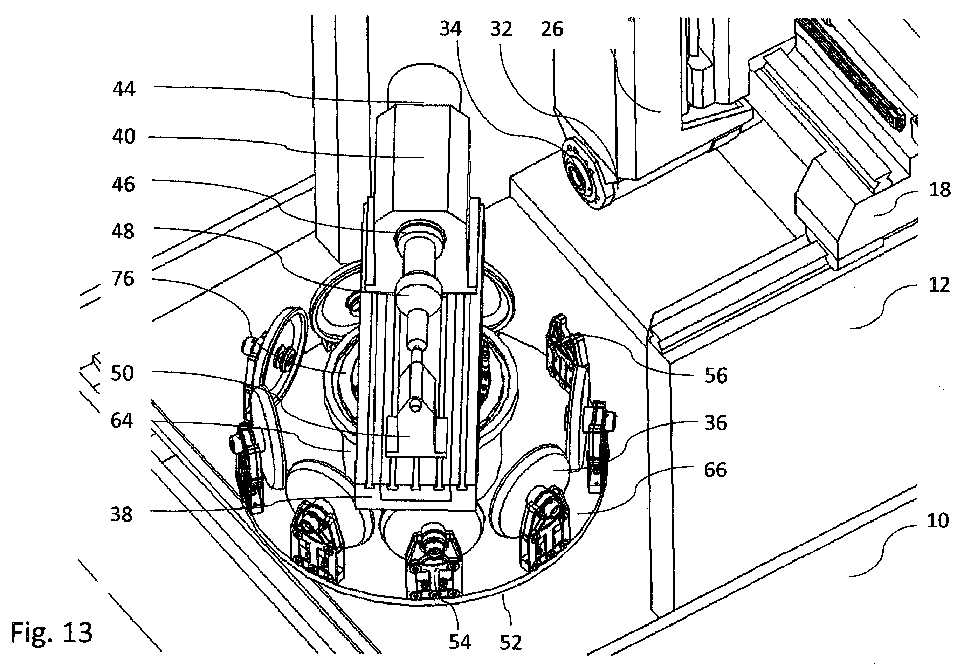

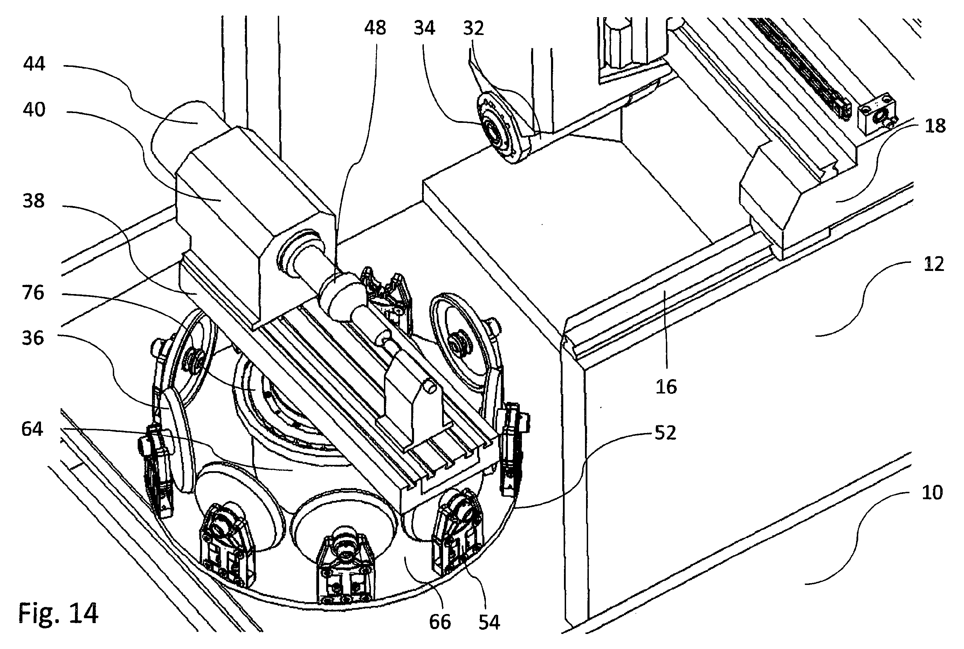

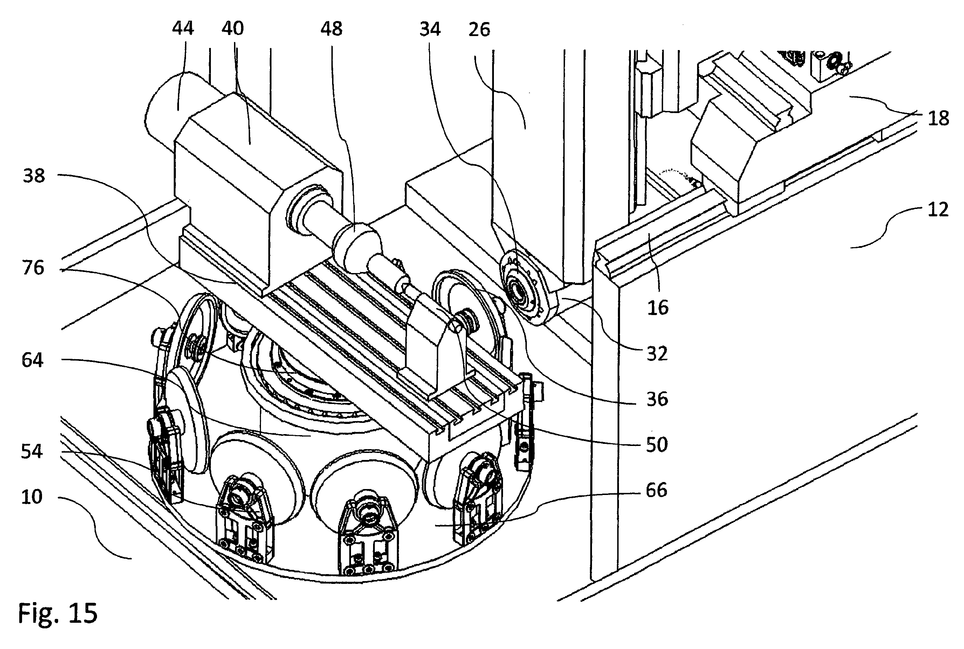

Für einen Wechsel des Werkzeuges, zum Beispiel einer Schleifscheibe 36, wird zunächst eine Werkzeugaufnahme 54 in die dem Z-Schlitten 26 zugewandte Wechselposition gedreht, wie Figur 12 zeigt. Eine in der Schleifspindel 32 gespannte Schleifscheibe 36 kann dann in diese freie Werkzeugaufnahme 54 abgelegt werden, wie dies Figur 8 zeigt. Die Schleifspindel 32 wird dann hochgefahren, um das Werkzeugmagazin 52 freizugeben. Hierbei ist das Werkzeugmagazin 52 in der in Figur 9 gezeigten Stellung maschinenfest gehalten, während der Maschinentisch 38 frei gegen das Werkzeugmagazin 52 verdrehbar ist. Um eine ausgewählte andere Schleifscheibe 36 zu spannen, wird zunächst der Maschinentisch 38 gegenüber dem maschinenfest gehaltenen Werkzeugmagazin 52 gesteuert so weit gedreht, bis die Längskante des Maschinentisches 38 senkrecht zur Achse der ausgewählten Schleifscheibe 36 steht, wie dies Figur 13 zeigt. In dieser Stellung werden die Indexaggregate 72 betätigt, wie dies in den Figuren 10 und 11 gezeigt ist. Dadurch wird das Magazinrad 62 von der maschinenfesten Positionierung vertikal abgehoben und drehfest mit dem Maschinentisch 38 gekuppelt. Anschließend wird mittels des C-Antriebsmotors 60 der Maschinentisch 38 zusammen mit dem drehfest angekuppelten Magazinrad 62 gedreht, bis sich das Magazinrad 62 mit der ausgewählten Schleifscheibe 36 in der Wechselposition befindet, wie dies in Figur 14 gezeigt ist. Nun kann das Magazinrad 62 wieder abgesenkt und dadurch drehfest am Maschinenbett 10 positioniert werden. Die Schleifspindel wird mittels des Z-Schlittens 26 abgesenkt, wie Figur 15 zeigt, sodass die ausgewählte neue Schleifscheibe 36 in das Spannfutter 34 der Schleifspindel 32 aufgenommen werden kann. Der Maschinentisch 38 ist nun wieder frei gegenüber dem maschinenfest gekuppelten Werkzeugmagazin 52 drehbar, sodass ein Werkstück 48 mittels der neu eingewechselten Schleifscheibe 36 bearbeitet werden kann.

### Bezugszeichenliste

- 10: Maschinenbett
- 12: Ständer
- 14: Rückwand
- 16: Y-Führungen
- 18: Brücke

- 20: X-Schlitten
- 22: X-Antrieb
- 24: X-Führungen
- 26: Z-Schlitten
- 28: Z-Antrieb

- 30: Z-Führungen
- 32: Schleifspindel
- 34: Spannfutter
- 36: Schleifscheibe
- 38: Maschinentisch

- 40: Werktstückspanneinrichtung
- 42: A-Achse
- 44: A-Antrieb
- 46: Spannmittel
- 48: Werkstück

- 50: Gegenlager
- 52: Werkzeugmagazin
- 54: Werkzeugaufnahmen
- 56: C-Gehäuse
- 58: C-Achsenkörper
- 60: C-Antriebsmotor
- 62: Magazinrad
- 64: Rohrkörper
- 66: Trägerscheibe
- 68: Positionierzapfen

- 70: Positionierbohrungen
- 72: Indexaggregate
- 74: Indexstößel
- 76: T-Nut
- 78: Indexbohrungen

## Patentansprüche

1. Bearbeitungsmaschine, insbesondere Schleifmaschine, mit einem Maschinenbett (10), mit zwei seitlich am Maschinenbett (10) angeordneten vertikalen Ständern (12), mit einer auf den vertikalen Ständern (12) in einer horizontalen linearen Y-Achse verfahrbaren Brücke (18), mit einem an der Brücke (18) in einer horizontalen linearen X-Achse verfahrbaren X-Schlitten (20), mit einem an dem X-Schlitten (20) in einer vertikalen linearen Z-Achse verfahrbaren Z-Schlitten (26), mit einer an dem Z-Schlitten (26) gelagerten Arbeitsspindel, insbesondere Schleifspindel (32), mit einem auf dem Maschinenbett (10) angeordneten Maschinentisch (38), der eine Werkstückspanneinrichtung (40) trägt, und mit einem Werkzeugmagazin (52), das als Magazinrad (62) ausgebildet ist, an seinem Umfang Werkzeugaufnahmen (54) zum auswechselbaren Aufnehmen von Werkzeugen, insbesondere Schleifscheiben (36), aufweist und um eine zur Z-Achse parallele Achse drehbar ist, wobei die Arbeitsspindel (32) ein Werkzeug (36) aus einer Werkzeugaufnahme (54) entnehmen und in diese abgeben kann, wenn diese Werkzeugaufnahme (54) in eine Wechselposition gedreht ist,
**dadurch gekennzeichnet, dass** das Werkzeugmagazin (52) unter dem Maschinentisch (38) angeordnet ist und im Bereich der Wechselposition seitlich über den Maschinentisch (38) hinausragt, sodass die Arbeitsspindel (32) neben dem Maschinentisch (38) nach unten an die sich jeweils in der Wechselposition befindende Werkzeugaufnahme (54) verfahrbar ist.

2. Bearbeitungsmaschine nach Anspruch 1,
**dadurch gekennzeichnet, dass** der Maschinentisch (38) auf dem Maschinenbett (10) um eine zur Z-Achse parallele vertikale C-Achse drehbar ist.

3. Bearbeitungsmaschine nach Anspruch 2,
**dadurch gekennzeichnet, dass**
die Arbeitsspindel (32) in Richtung der Y-Achse ausgerichtet unverschwenkbar an dem Z-Schlitten (26) gelagert ist.

4. Bearbeitungsmaschine nach Anspruch 2,
**dadurch gekennzeichnet, dass**
das Werkzeugmagazin (52) koaxial zur C-Achse des Maschinentisches (38) drehbar ist.

5. Bearbeitungsmaschine nach Anspruch 4,
**dadurch gekennzeichnet, dass**
das Werkzeugmagazin (52) gesteuert wahlweise am Maschinenbett (10) drehfest positionierbar oder an dem Drehantrieb des Maschinentisches (38) um die C-Achse ankuppelbar ist.

6. Bearbeitungsmaschine nach einem der vorhergehenden Ansprüche,
**dadurch gekennzeichnet, dass**
die Werkstückspanneinrichtung (40) einen Antrieb (44) aufweist, durch welchen ein Werkstück (48) um eine horizontale A-Achse (42) drehbar ist.

7. Bearbeitungsmaschine nach einem der vorhergehenden Ansprüche,
**dadurch gekennzeichnet, dass**
das Werkzeugmagazin (52) jeweils mit wenigstens einer Werkzeugaufnahme (54) rückseitig in der Wechselposition und frontseitig zum Bestücken über den Maschinentisch (38) hinausragt.

## Claims

1. Processing machine, in particular grinding machine, having a machine bed (10), having two vertical stands (12) arranged laterally on the machine bed (10), having a bridge (18) which is able to be moved on the vertical stands (12) in a horizontal linear Y axis, having an X-carriage (20) which is able to be moved on the bridge (18) in a horizontal linear X axis, having a Z-carriage (26) which is able to be moved on the X-carriage (20) in a vertical linear Z axis, having a working spindle, in particular grinding spindle (32), which is mounted on the Z-carriage (26), having a machine table (38) which is arranged on the machine bed (10) and which supports a workpiece clamping device (40), and having a tool magazine (52) which is formed as a magazine wheel (62), has tool receivers (54) on its periphery for exchangeable receiving of tools, in particular grinding wheels (36), and is able to rotate around an axis which is parallel to the Z axis, wherein the working spindle (32) removes a tool (36) from a tool receiver (54) and can emit in this when this tool receiver (54) is rotated into an exchange position,
**characterised in that**
the tool magazine (52) is arranged under the machine table (38) and projects in the region of the exchange position laterally over the machine table (38), such that the working spindle (32) next to the machine table (38) is able to be moved downwards onto the tool receiver (54) which is located in the exchange position respectively.

2. Processing machine according to claim 1,
**characterised in that** the machine table (38) is able to rotate on the machine bed (10) around a vertical C-axis which is parallel to the Z-axis.

3. Processing machine according to claim 2,
**characterised in that** the working spindle (32) is mounted on the Z-carriage (26) in a non-pivotable manner and to be aligned in the direction of the Y-axis.

4. Processing machine according to claim 2,
**characterised in that** the tool magazine (52) is able to rotate coaxially to the C-axis of the machine table (38).

5. Processing machine according to claim 4,
**characterised in that** the tool magazine (52) is optionally able to be positioned non-rotatably in a controlled manner on the machine bed (10) or is able to be coupled to the rotational drive of the machine table (38) around the C-axis.

6. Processing machine according to one of the preceding claims,
**characterised in that** the workpiece clamping device (40) has a drive (44), using which a workpiece (48) is able to rotate around a horizontal A-axis (42).

7. Processing machine according to one of the preceding claims,
**characterised in that** the tool magazine (52) respectively having at least one tool receiver (54) projects to the backside in the exchange position and to the front side for equipping via the machine table (38).

## Revendications

1. Machine d'usinage en particulier rectifieuse comprenant un banc de machine (10), deux montants verticaux (12) montés latéralement sur le banc de machine (10), un pont (18) pouvant être déplacé sur les montants verticaux (12) selon un axe linéaire horizontal Y, un chariot X (20) pouvant être déplacé selon un axe linéaire horizontal X, un chariot Z (26) pouvant être déplacé sur le chariot X (20) selon un axe Z linéaire vertical,
une broche d'usinage en particulier une broche porte-meule (32) montée sur le chariot Z (26), une table de machine (38) montée sur le banc de machine (10) qui porte un dispositif serrage de pièce (40) et un magasin d'outils (52) réalisé sous la forme d'une roue-magasin (62) qui porte sur sa périphérie des logements de réception d'outil (54) pour permettre la réception interchangeable d'outils, en particulier de meules (36) et est mobile en rotation autour d'un axe parallèle à l'axe X, la broche d'usinage (32) pouvant prélever un outil (36) d'un logement de réception d'outil (54) et le déposer dans celui-ci lorsque ce logement de réception d'outil (54) est déplacé en rotation dans une position d'échange,
**caractérisée en ce que**
le magasin d'outils (52) est monté au-dessous de la table de machine (38) et dépasse latéralement de cette table de machine (38) dans la zone de la position d'échange de sorte que la broche d'usinage (32) puisse être déplacée vers le bas latéralement à la table de machine (38) au niveau du logement de réception d'outil (54) situé dans la position d'échange.

2. Machine de traitement conforme à la revendication 1,
**caractérisée en ce que**
la table de machine (38) est mobile en rotation sur le banc de machine (10) autour d'un axe C vertical parallèle à l'axe Z.

3. Machine d'usinage conforme à la revendication 2,
**caractérisée en ce que**
la broche d'usinage (32) est montée solidairement en pivotement sur le chariot Z (26) en étant orientée dans la direction de l'axe Y.

4. Machine d'usinage conforme à la revendication 2,
**caractérisée en ce que**
le magasin d'outils (52) est mobile en rotation coaxialement à l'axe C de la table de machine (38).

5. Machine d'usinage conforme à la revendication 4,
**caractérisée en ce que**
le magasin d'outils (52) peut être sélectivement commandé de façon à être positionné fixe en rotation sur le banc de machine (10) ou accouplé à l'entraînement en rotation de la table de machine (38) autour de l'axe C.

6. Machine d'usinage conforme à l'une des revendications précédentes,
**caractérisée en ce que**
le dispositif de serrage de pièce (40) comporte un entraînement (44) par l'intermédiaire duquel une pièce (48) est mobile en rotation autour d'un axe A horizontal (42).

7. Machine de traitement conforme à l'une des revendications précédentes,
**caractérisée en ce que**
le magasin d'outils (52) dépasse de la table de machine (38) respectivement en arrière par au moins un logement de réception d'outil (54) dans la position d'échange et côté frontal pour permettre son équipement.
